# EUROPEAN PATENT APPLICATION

(11) **EP 2 166 468 A1**
(43) Date of publication of application: **24.03.2010**
(21) Application number: 09466004.0
(22) Date of filing: 14.04.2009
(51) Int. Cl.: G06F 17/30

(54) **Integrated system for electronic documentation of public administration resources and method of its systemic interconnection**

(30) Priority: 22.09.2008 CZ 20080576
(71) Applicant: European Business Enterprise, a.s., 25101 Ricany, okres Praha Vychod (CZ)
(72) Inventor: Paclik, Vladimir, 25163 Strancice (CZ); Paclikova, Jitka, 25163 Strancice (CZ); Jandecka, Tomas, 28163 Horni Kruty (CZ)
(74) Representative: Loskotová, Jarmila

(57) **Abstract**

Integrated system of electronic documentation of public administration resources connected to an information source, particularly to the Internet computer network consists of modules - Module-Database of information sources (1), Module-Database for information source data and metadata collection (2), Module-Fulltext catalogue (3), Module-Database of sought expressions (4), Module-Controlled dictionary (5) a Module-Metadata (6), which are mutually systemically interconnected, while independent access by means of web interface (8) as well as internal (9) interface into all the Modules (1) to (6) is enabled.

## Description

### The Technical Field

The invention deals with public administration information resources, solves linkage and compatibility of the information accessible on the Internet for use by the public as well as public administration. The integrated system of electronic documentation of public administration resources serves for communication and information exchange between operators of public administration services and the public.

### The Prior Art

The Internet computer network is commonly being used for transfer of information from public administration and its provision to users nowadays. Incompleteness, difficult archiving, updating and safeguarding information present the generally known drawback of providing information through the Internet. Overloading with information of various importances and various age and impossibility of its quick classification or provision to the user public for effective retrieval are the present problems.

### The Nature of Invention

The above drawbacks are solved by the Integrated system of electronic documentation of public administration resources connected to the Internet computer network, consisting of Module 1-Database of information resources, Module 2-Database for information resource data and metadata collection, Module 3-Fulltext catalogue, Module 4-Database of sought expressions, Module 5 - Controlled dictionary and Module 6-Metadata, which are mutually systemically interconnected, while independent access from web interface as well as internal interface into all the Modules (1) to (6) is enabled.

The systemic interconnection of the individual modules of the Integrated system of electronic documentation of public administration resources connected to the Internet computer network runs on the principle that a list of information sources is stored into the Integrated system of electronic documentation of public administration resources to Module 1-Database of information sources, including their locations, the Unified system of electronic documentation of public administration sources visits all the information sources according to the list and stores their content in Module 2-Database for information source data and metadata collection according to the preset permitted methods of updating information sources in Module 1-Database of information sources, performs metadata updating in the same module and data updating in Module 3-Fulltext catalogue, indexes the metadata in Module 1-Database of information sources, indexes the data in Module 3-Fulltext catalogue and provides the results of searching in the metadata or in the data according to the expression sought by the user in Module 1-Database of information sources and Module 3-Fulltext catalogue, provides priority information sources during searching from Module 5-Controlled dictionary, stores the expression sought for by the user to Module 4-Database of sought expressions and during searching or edition it offers the user in Module 1-Database of information sources limitation of the set of sought through document according to at least one metadata parameter and display of the data in the structure defined in Module 6-Metadata.

Description of the Integrated system of electronic documentation of public administration sources modules.

Module-Database of information sources consists of data - documents (records) of information sources in integrated metadata structure.

Operator's users have access to the database for reading and making changes in the internal interface. Some users of cooperating entities have secured access to the database web interface through a username and a password for reading all accessible information sources and for modifying their own information sources. Users with anonymous access without logging in through a username and a password have also access to the database web interface for reading all accessible information sources. Documents of information sources are identified/defined by Zdroj 1.1. form, which contains metadata in a unified structure.

Views intended for working with data are located in the internal interface.

Apart from registration of metadata of information sources their web interface presentation is also provided within this database.

The following elements serve for information classification:
<dc:source>
   This element indicates from which subsystem (specialized database) an information source comes (the source the described information source is a part of).
<dc:language>
   This element indicates what language the information source is written in. One information source may have more language mutations.
<dc:format>
   This element indicates what format the information source is stored in. One information source may be stored in more formats.
<dc:date>
   This element indicates important date in the information source life cycle.
<dc:creator>
   This element indicates the entity primarily responsible for the information source content.
<dc:publisher>
   This element indicates the entity primarily responsible for the information source accessibility.
<dc:contributor>
   This element indicates the entity primarily responsible for the content of contributions to the information source.
<dc:coverage>
   This element indicates field classification, coverage related to the content of the described information source.

The information sources are published within dynamically generated web interface pages - classified lists on the operator's web address.

The editing system created within Module-Database of information sources ensures processes of updating information source metadata. There are processes created for loading data from the Module-Database of information sources for collection of data and metadata of information sources to the editing system, where direct updating of metadata of an information source already stored in the Module-Database of information sources according to preset criteria, or requirements for modification of information source metadata are created. Operator's staff members may access to the editing system by means of the internal interface, and co-operating entities may access by means of web interface after logging in by a username and password, who may perform direct updating of their own information sources, for the content of which they are responsible - through the EditZdroj 1.4 form, or they may create requests for a change of information source metadata - through the ZmenaZdroj 1.8 form.

Anonymous user may also create requests for change by means of the web interface. The editing work is done by the operator's staff trained for this activity.

Change requirements for information source metadata are identified/defined by ZmenaZdroj 1.2. form.

The web interface - searching for information sources is prepared by means of form $$SearchTemplateDefault 1.3, to which a user may write the required expression and possible further searching parameters. The form consequently returns a list of information sources corresponding to the required expression in the "Recommended information sources" classification - upon the Module-Controlled dictionary, "Found information sources" - from the Module-Database of information sources and "Fulltext searching" - reference to the searching result in Module-Fulltext catalogue.

Indexation of information sources for searching is provided by a task Indexer running in the Module-Database of information sources on the operator's server. The indexer creates a separate file on the server - a fulltext index of all the information sources stored in the database. The index is then used in processing requests from users for searching.

### Information on the forms

Form Zdroj 1.1 serves for entering and editing information source metadata by means of the internal interface and enables:
- entering the appropriate metadata in a uniform structure;
- storing the setting whether the information source is to be publicly accessible;
- allocation of an information source to any of the expressions in Module 5-Controlled dictionary;
- definition of authors / users with the right to edit a document;
- definition in what way the stored document may be updated.

A saving check function ensures that if any of the presented identifiers already exists in the database the form cannot be stored.

Form ZmenaZdroj 1.2 serves to the internal interface users for entering and processing a change request to the information source metadata and enables:
- identification of the change request type, usually generated automatically by the system;
- identification of the request origin, usually generated automatically by the system;
- storing the setting whether the information source will be publicly accessible after processing the change request;
- entering the appropriate metadata in uniform structure;
- loading the original metadata values from the appropriate information source before occurrence of the change request and possible advice of value change.
If any of the presented identifiers already exists in the database the form cannot be stored.

Form $$SearchTemplateDefault 1.3 - serves for displaying the searching results in web interface. If an expression being sought by a user exists in the Module 5-Controlled dictionary, information sources and information allocated to the expression being sought from the Module 5-Controlled dictionary, and a list of information sources from Module 1-Database of information sources, which are associated with the given expression from the Module 5-Controlled dictionary by means of the field Dictionary are displayed at the appropriate place on the form in the "recommended information sources" section by means of the running VyhledavaniSlovnik agent. The VyhledavaniSlovnik agent also ensures an entry into the Module 4-Database of sought expressions.

Form EditZdroj 1.4 - serves for entering and editing information source metadata by a user logged in in web interface.

The form enables entering the appropriate metadata in uniform structure and store of adjustment, whether the information source is to be publicly accessible.

If any of the presented identifiers already exists in the database the form cannot be stored.

The Title, Date, Creator, Publisher and Identifier fields are checked whether they are before they are stored. The form cannot be stored if these data are not filled in.

Form OpenMetadata 1.5 - the form serves for displaying XML metadata of the information source in web interface.

Form Trideni 1.6 - the form serves for displaying a list of information sources in web interface according to chosen classification method.

The form enables a choice what information sources should be displayed to the user.

Form Vstup 1.7 - the form serves for displaying a list of information sources of the logged in user in web interface - his/her access page.

Form ZmenaZdroj 1.8. - the form serves for entering a request for change of metadata of an information source in web interface and for displaying metadata of an information source in web interface in text form.

The form enables:
- displaying metadata in text form;
- entering the appropriate metadata in unified structure;
- storing the setting whether the information source will be publicly accessible;
- storing identification of the change request type, which is subsequently displayed on the internal interface;
- storing the setting whether the information source is to be publicly accessible, which is subsequently displayed on the internal interface.
If any of the presented identifiers already exists in the database the form cannot be stored.

The Title, Date, Creator, Publisher and Identifier fields are checked whether they are before they are stored. The form cannot be stored if these data are not filled in.

### Information on agents

Agent C ZmenaUdaju - automatic operation - runs when a change request is stored in the form ZmenaZdroj 1.2 in the database internal interface by the key Status\Confirm Changes.

Process description

Agent C ZmenaUdaju loads all the new field values from a change request.

If the change request status is "U" - change request it finds the appropriate information source to which the change request was created.

If the change request status is "N" - creation request, it creates a new information source and informs the internal interface user about that via the information window.

After that it stores the new values loaded from the change request to the information source and informs the internal interface user about the updating via the information window.

Agent A VyhledavaniSlovnik - automatic operation - runs when a search result within the form $$SearchTemplateDefault 1.3 is displayed in web interface. According to the expression entered by the user it finds and displays information from Module 5-Controlled dictionary and writes all searching parameters to Module 4-Database of sought expressions.

### Process description:

Agent A VyhledavaniSlovnik loads the expression entered to the searching system by the user. After that it searches whether the same expression as the main expression or any of the keywords exists in the Module 5-Controlled dictionary. If it finds the expression in the Module 5-Controlled dictionary it finds what complementary information, e.g. reference, texts are available in the Module 5-Controlled dictionary to the expression. If it finds complementary information to the expression it displays it at the defined place in the "Recommended information sources" section of the searching form. Agent A VyhledavaniSlovnik then loads all the parameters entered by the user to the searching system and stores them as a new document defined by the form Result 4.1 to the Module 4-Database of sought expressions.

Module 2-Database for information source data and metadata collection provides collection of data and metadata of information sources and newly downloaded data and metadata of information sources are stored here for further processing by the system.

A Crawler is built here for ensuring the processes of collection of information sources. This tool collects data and particularly metadata of information sources from the Internet environment to Module 2-Database for information source data and metadata collection.

Only the users of the operator's internal interface (9) have access to the database. Information on the forms

Documents are indicated/defined by HTMLForm 2.1, which enables storing of features of information sources, data and metadata, storing source code and text content of sites.

Views intended for the work with data are located in the internal interface /9/ of the database.

HTMLForm 2.1 - also serves for storing information on an internet site stored by Agent B NactiURLserver - automatic process collecting data and metadata of information sources.

Form HTMLForm 2.1 enables the following to be stored:
- Title value included in the HTML source code of given site;
- real URL addresses of given site;
- URL addresses on which information source/site metadata are located;
- information whether the information source metadata stored in XML have been processed by the system;
- all text information of the site.

### Information on the agents

Agent B NactiURLserver - automatic operation serving for downloading data and metadata of an information source - for further processing by Agent D ZpracujXMLserver.

### Process description

Agent B NactiURLserver first marks all the documents in the Module 3-Fulltext catalogue for deletion.

After that agent B NactiURLserver browses all the information sources in Module 1-Database of information sources that contain URL identifier and the preset method of updating information source is either "Automatically after metadata downloading" or "Upon request after metadata downloading".

According to the URL identifier (URL address) it downloads the data and metadata of given Internet site and stores them into the Module 2-Database for information source data and metadata collection as documents defined by HTMLForm 2.1.

It stores the text content of the sites to the Module 3-Fulltext catalogue, and if the site has also a metadata file the ID of the information source the site belongs to is also stored. Documents designated earlier for deletion from the Module 3-Fulltext catalogue are finally deleted.

Agent D ZpracujXMLserver - automatic operation serving for processing downloaded data and metadata of an information source - it updates metadata of information sources in Module 1-Database of information sources or creates requests for their modification.

Process description

Agent ZpracujXMLserver browses all the information sources in Module 1-Database of information sources.

It finds all identifiers of each information source.

The corresponding system searches downloaded metadata that have not been processed according to each of the indicators found in the Module 2-Database for information source data and metadata collection.

If it finds any metadata it either updates the corresponding information source in the Module 1-Database of information sources or creates a change request upon the metadata currently stored in the Module 2-Database for information source data and metadata collection, according to the adjustment of the method of information source updating in the Module 1-Database of information sources.

If more metadata are found to a single information source the updating process of the particular information source only creates change requests in the Module 1-Database of information sources and no automatic updating of the information source is performed.

Module 3-Fulltext catalogue is a database serving for automated storing of text information on Internet sites the content of which is collected and updated by means of automated processes to documents in Module 3-Fulltext catalogue, defined by the form Zdroj 3.1. Apart from text information registration the database also provides its presentation through Internet presentation, web interface (8) searching in the Fulltext catalogue.

Operator's internal interface users have access to the database for reading and making possible modifications. User's with anonymous access without logging by means of a username and a password as well as users logged in by means of a username and a password have access to the web interface for reading all accessible documents with text information on Internet sites.

Views intended for working with data are located in the database internal interface.

The web interface - fulltext searching is prepared by means of the form $$SearchTemplateDefault 3.2, to which a user may enter the required expression and further possible searching parameters.

The form subsequently returns a list of sites corresponding with the required expression.

Indexation of documents for searching is provided by a task Indexer in the Module 3-Fulltext catalogue. The indexer creates a separate file - a fulltext index of all the documents stored in the database. The index is then used in processing requests from users for searching.

### Information on the forms

Form Zdroj 3.1 - serves for storing data of an information source, e.g. an Internet site loaded by the agent NactiURLserver from the Module 2-Database for information source data and metadata collection.

The form enables:
- entering information to which information source from Module 1-Database of information sources the particular data are linked to;
- storing the text content of the site loaded by the agent NactiURLserver from Module 2-Database for information source data and metadata collection.

Form $$SearchTemplateDefault 3.2 - the form serves for displaying the search results in web interface. During its display the agent E ZapisVyhledavani ensuring entry into Module 4-Database of sought expressions is activated.

Module 4-Database of sought expressions is a database created for entering searched expressions from the web interface (8). The entry is always performed when a searching result is displayed to the database of searched expressions.

The entry is ensured by an agent from Module 1-Database of information sources or from Module 3-Fulltext catalogue. Users of internal interface (9) have access to the database.

The documents are identified/defined by the form Result 4.1, enabling displaying the expression being searched for by a user of the internal interface, and displaying further searching parameters set by a web interface user, e.g. the number of found results according to user' requirement.

Views intended for working with data are located in the internal interface.

Module 5-Controlled dictionary - a database intended for definition of the most frequently searched expressions, containing the most sought expressions, including their synonyms and inflected forms. The most important information sources, which thus gain considerable priority in searching in web interface are allocated to these most sought expressions, including their synonyms and inflected forms.

Operator's internal interface users have access to the database.

Information on the forms

Form Zaznam 5.2 identifies/defines the documents of the most often searched expressions.

The form enables:
- storing the main expression and related keywords, synonyms and inflected forms;
- storing the setting whether the expression from the controlled dictionary shall be publicly accessible.

Form Informace 5.1 identifies/defines the documents to which references and information related to the particular document defined by the form Zaznam 5.2. are stored.

The form serves for storing information that is to be displayed from the Controlled dictionary within the form $$SearchTemplateDefault 1.3 during searching in web interface of Module 1-Database of information sources,

The appropriate main expression of Module 5-Controlled dictionary the information belongs to is automatically entered when the document is stored.

The date of publication (Yes/No) from the appropriate main expression of Module 5-Controlled dictionary the information belongs to is automatically entered when the document is stored.

Form Informace 5.1 enables entering information, texts, references, pictures that should be displayed from Module 5-Controlled dictionary within the form $$SearchTemplateDefault 1.3 during searching in web interface of the Module 1-Database of information sources.

Views intended for working with data are located in the internal interface.

Module 6-Metadata - this database serves for setting the basic scheme of displaying metadata of information sources in XML and for displaying the metadata themselves.

Operator's internal interface users have access to the database.

The basic scheme document is identified/defined by the form XML 6.2.

Form Typ 6.1 subsequently identifies/defines the exact displaying schemes of metadata in XML, applied in the individual databases in web interface.

Views intended for working with data are located in the internal interface.

### Information on the forms

Form XML 6.2 - the form serves for storing the basic XML scheme of metadata in the internal interface, which is subsequently used for displaying all the metadata in web interface.

Form Typ 6.1 - a form serving for defining metadata "mask" for entered database in the internal interface.

Module 7-Edit system - the database serving for creation of the basic navigation to the web interface. The operator's internal interface users that have access for reading and making changes adjust navigation references and add further possible text information assisting users in orientation in web interface. They perform these settings by means of the "Stranka" form, which defines features / display method of the target information - edit system page, internal reference to the Internet, file etc. By the form "Odkaz" they place references to the navigation menus or to individual sites of the web interface.

User's with anonymous access without logging by means of a username and a password as well as users logged in by means of a username and a password have access to the web part of the database for reading all the accessible pages of Module 7-Edit system.

Views intended for working with data are prepared in the internal interface.

By launching and using the Unified system of electronic documentation of public administration sources for communication and information exchange among operators of public administration services, the following will be achieved thanks to the unique interconnection of the individual modules, to the use of forms and particularly application of the agents - automatic operations of the system:
- introduction of a unified data structure describing the public administration sources by means of metadata;
- possibilities to search heterogeneous information in a unified way by means of metadata;
- substantial acceleration of user access to public administration information and introduction of automated data and metadata collection system from Internet sites and remarkable reduction of demand for manual work.

### Outline of the Figures in Drawing

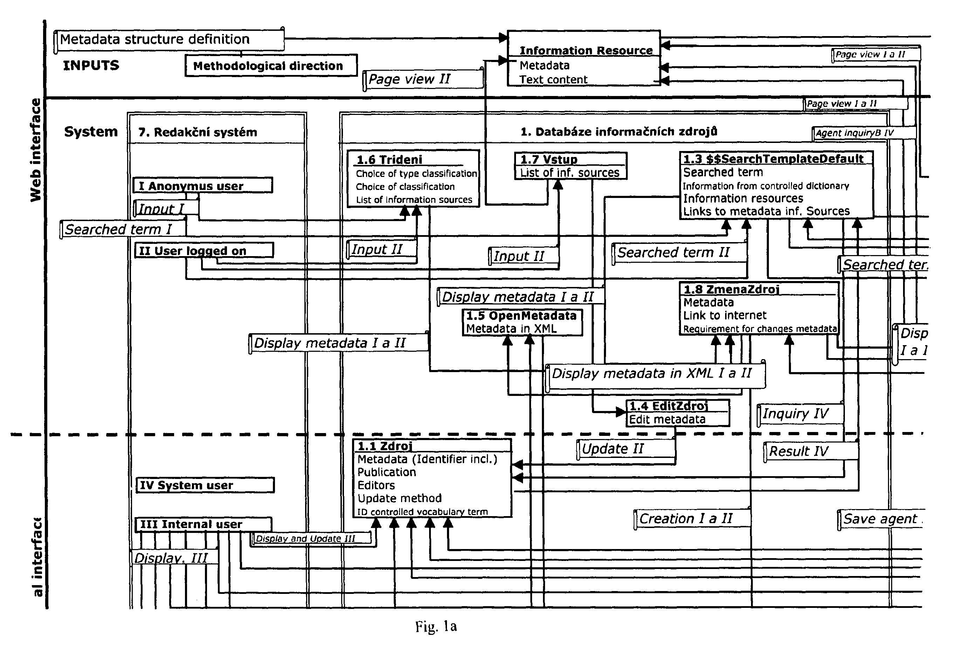

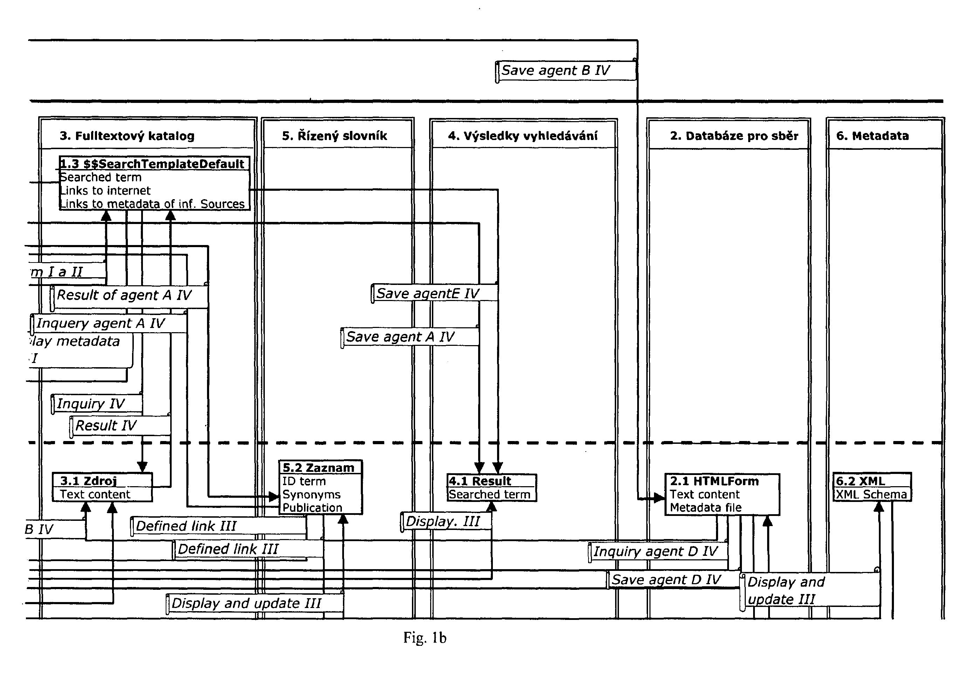

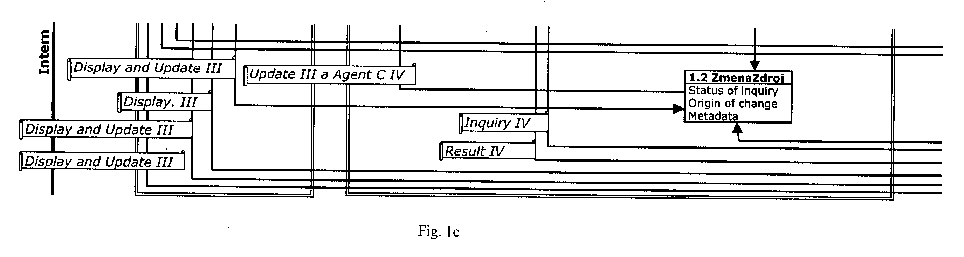

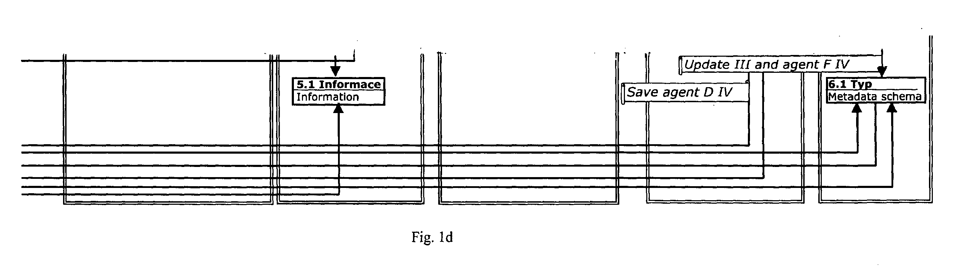

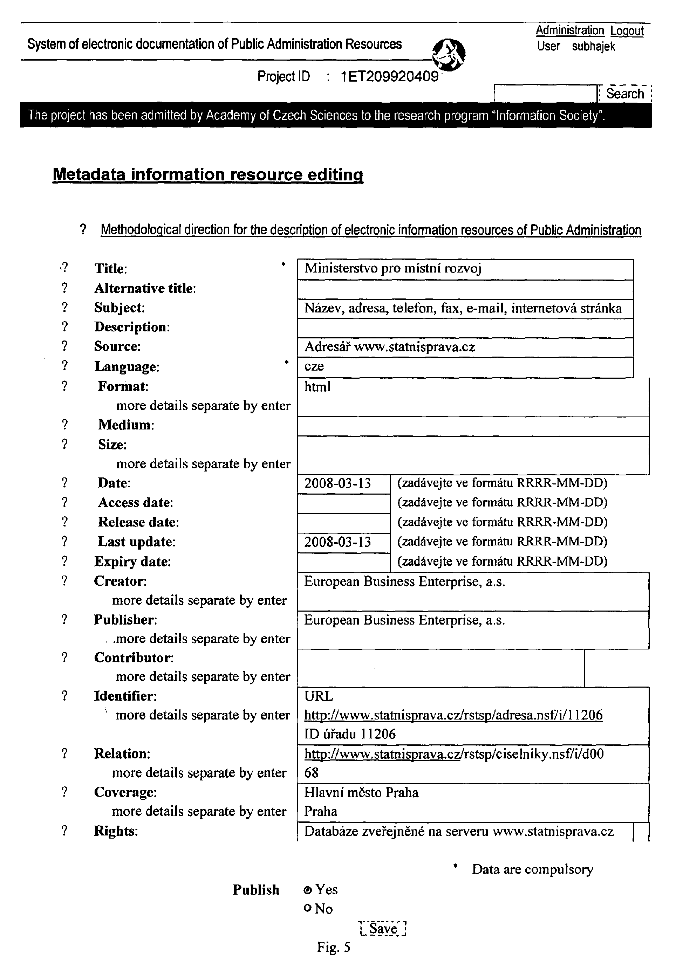

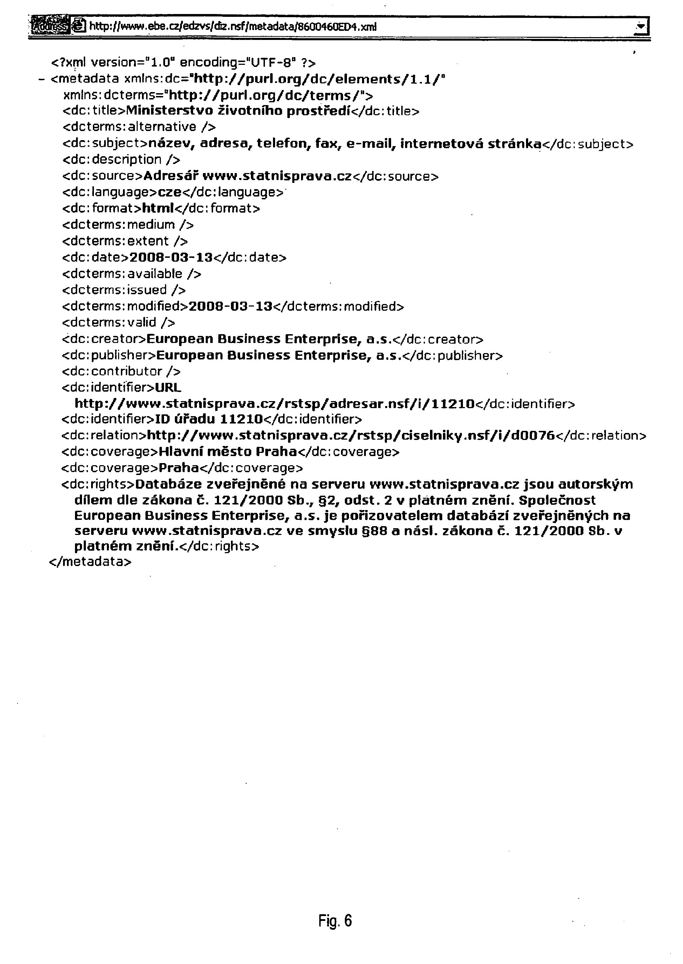

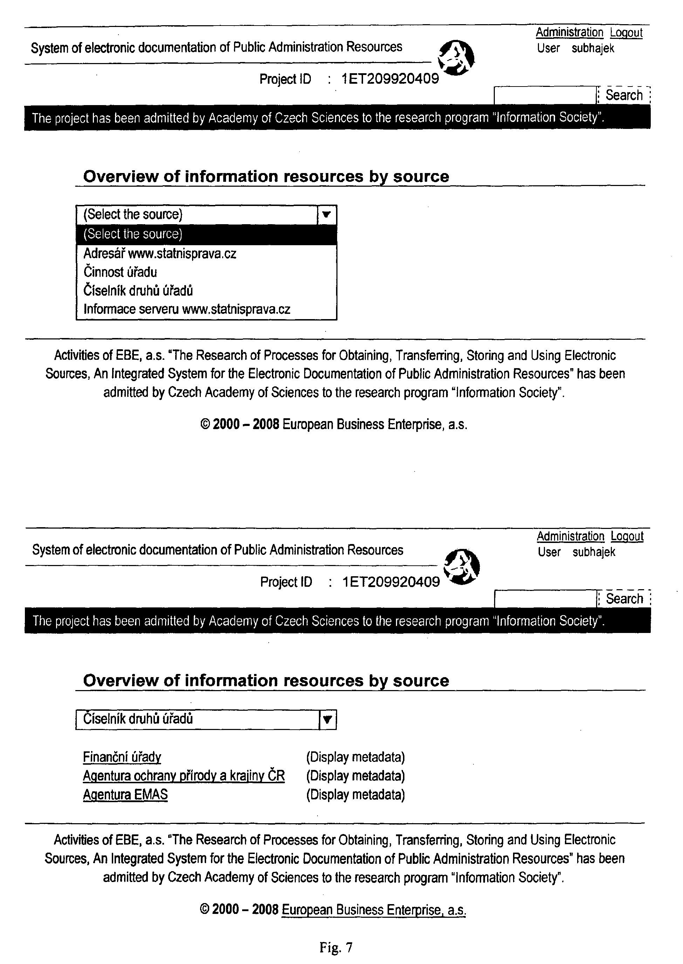

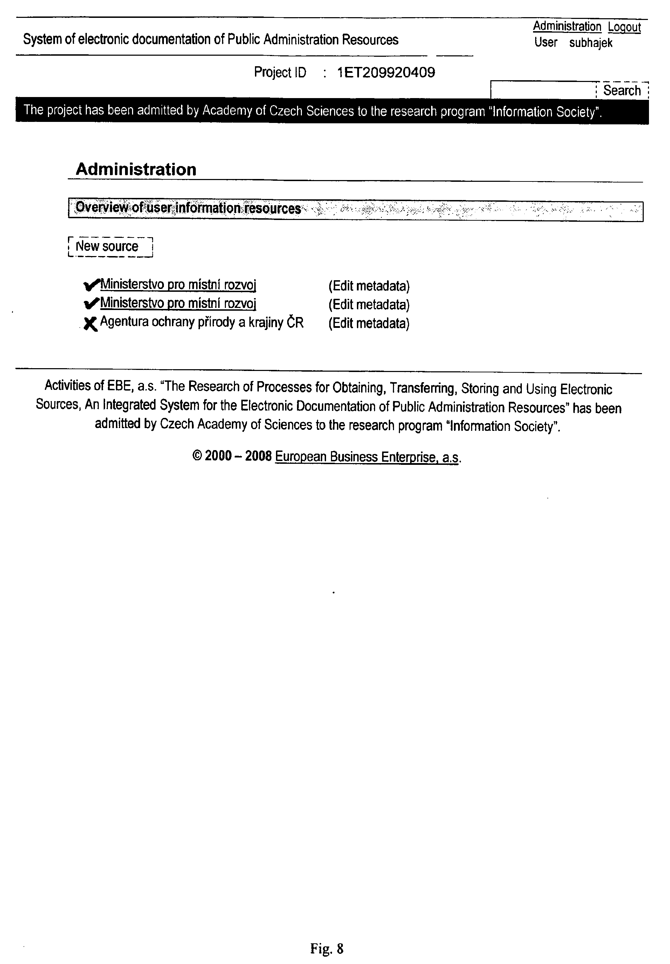

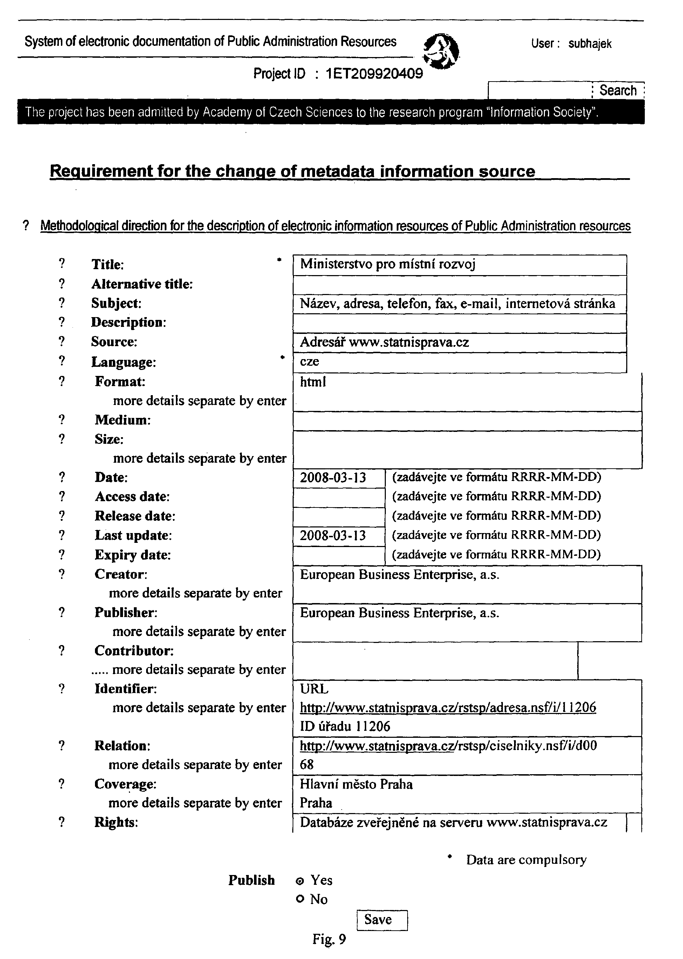

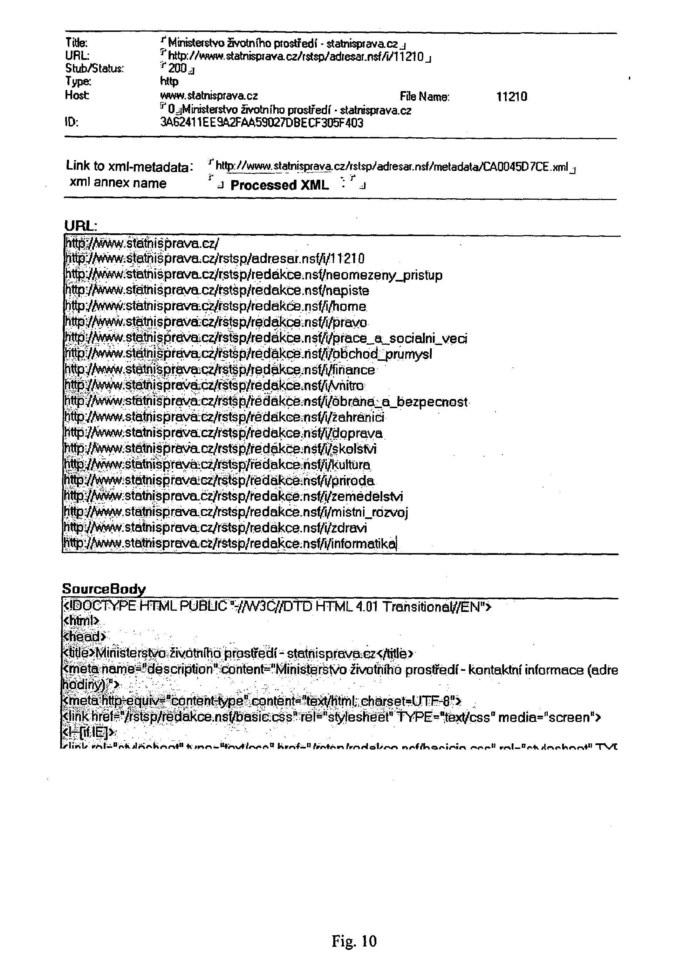

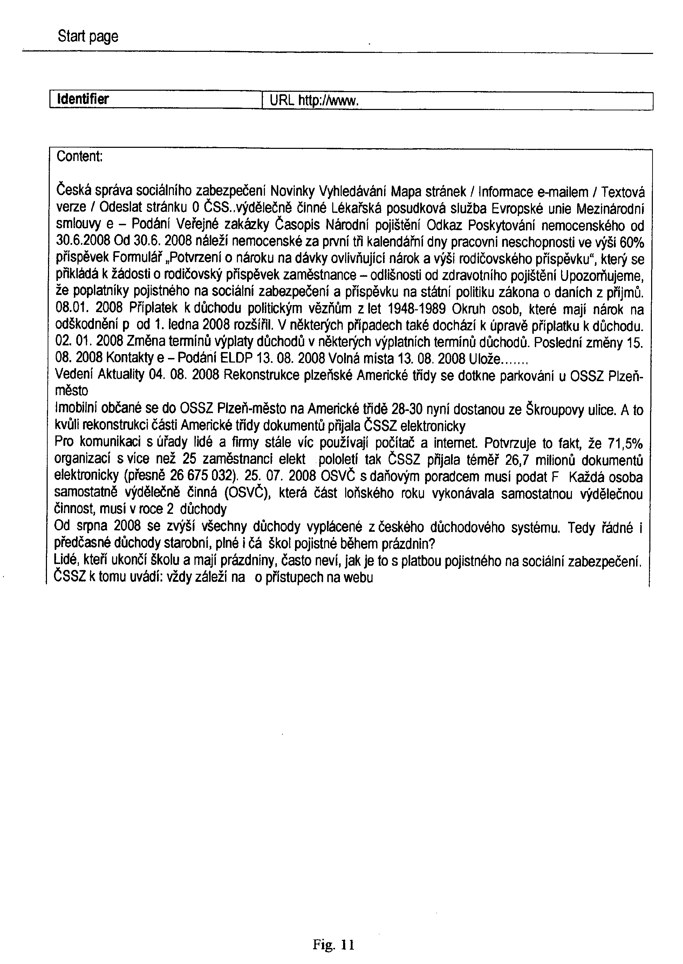

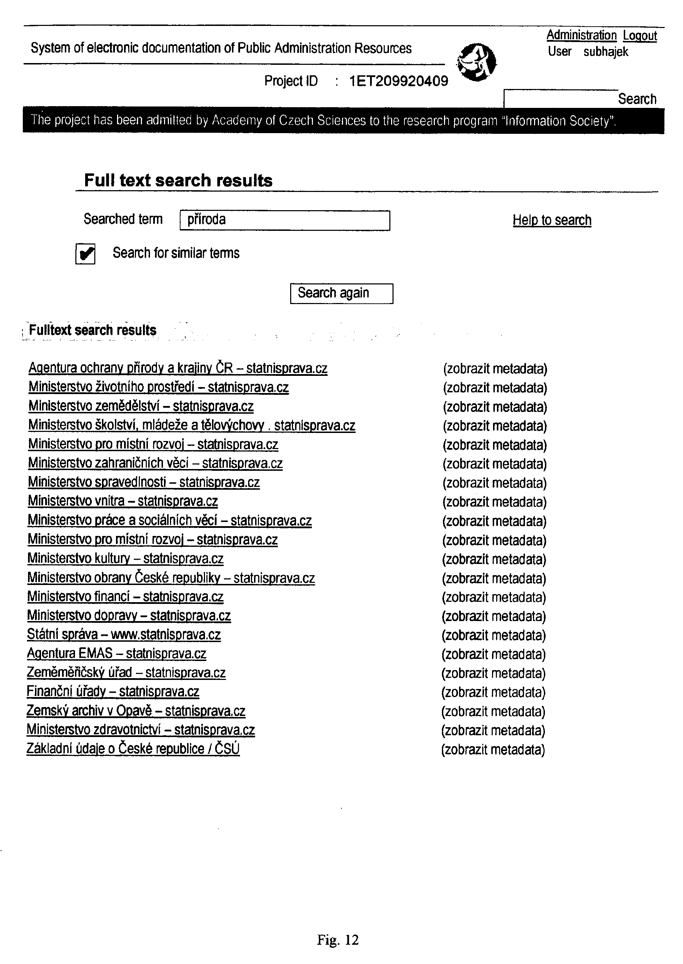

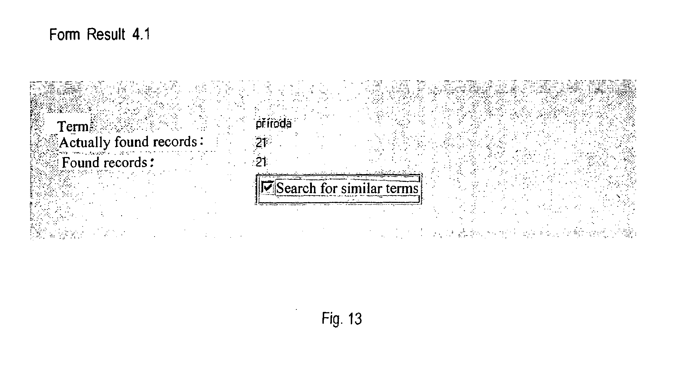

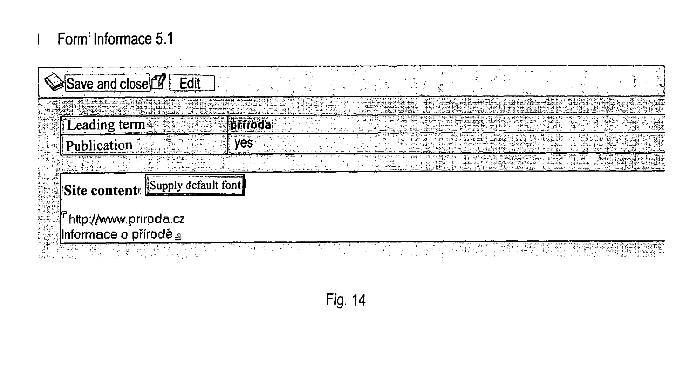

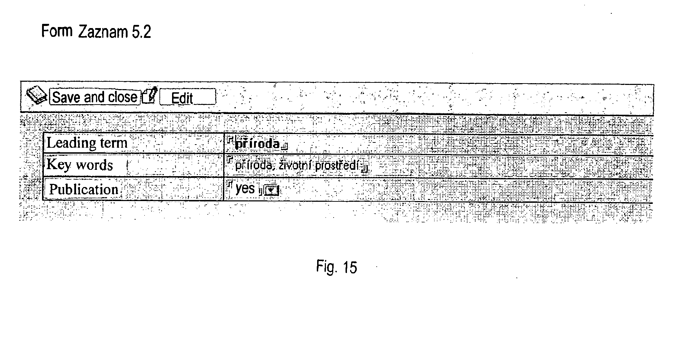

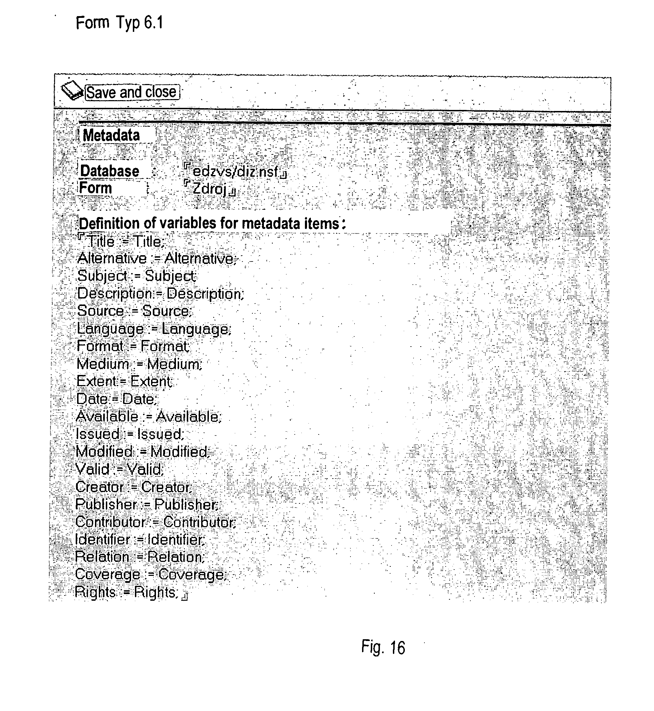

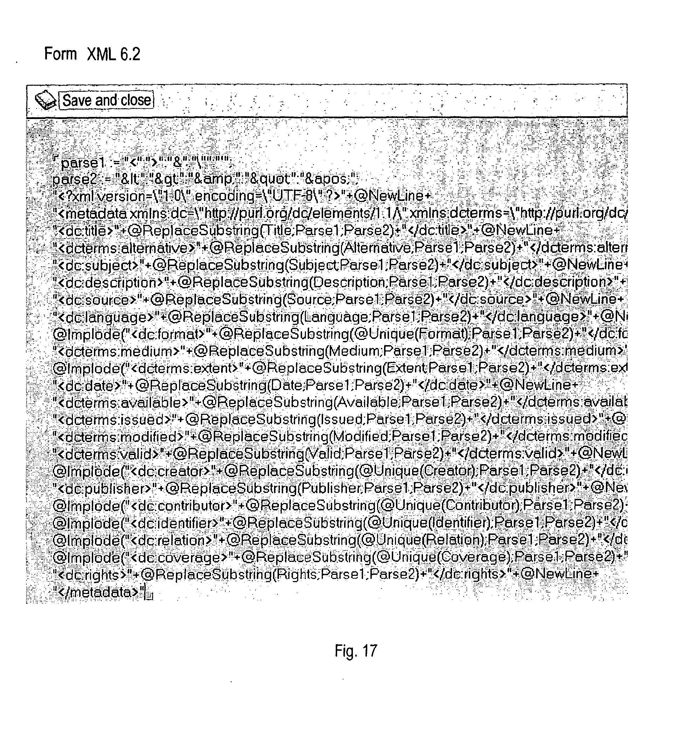

The Unified system of electronic documentation of public administration sources is explained in the enclosed drawings, where
Fig. 1 shows the systemic interconnection of the modules and the other figures show the forms as follows:

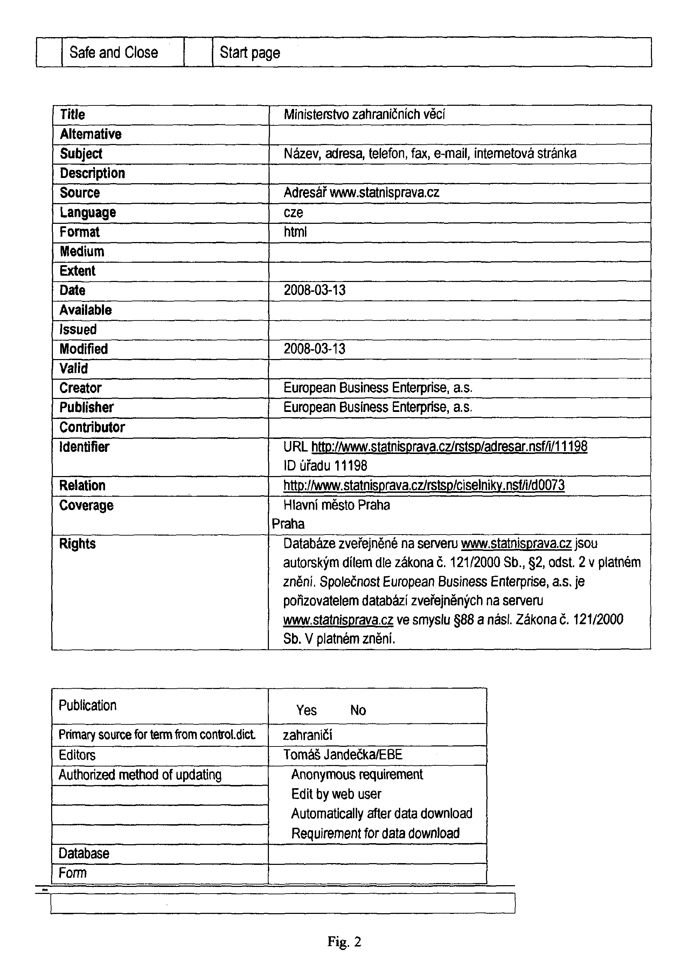

Fig. 2 - Zdroj 1.1

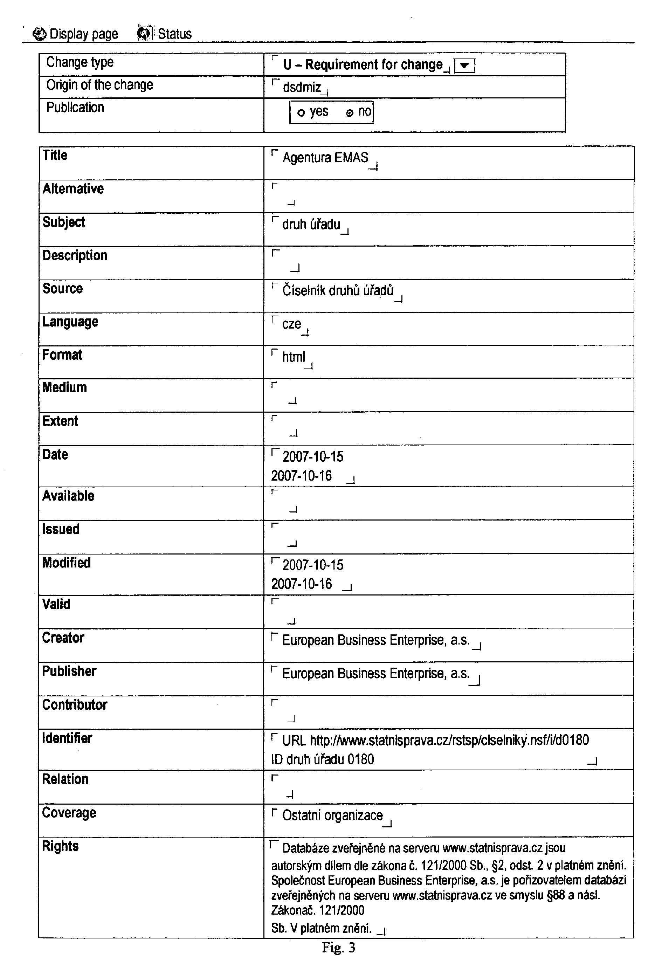

Fig. 3 - ZmenaZdroj 1.2

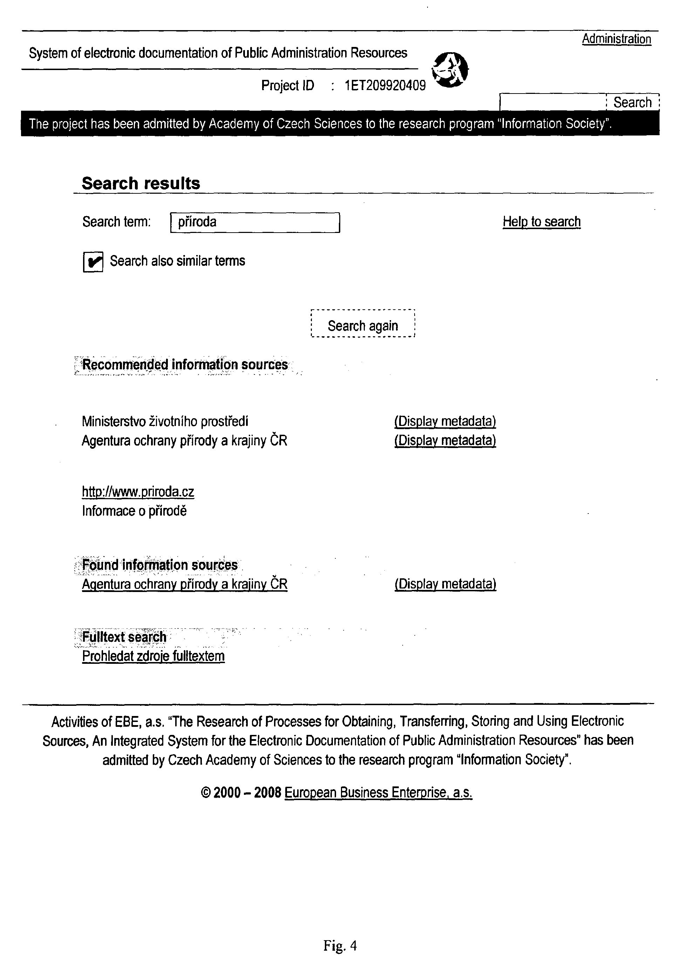

Fig. 4 - $$SearchTemplateDefault 1.3
Fig. 5 - EditZdroj 1.4
Fig. 6 - OpenMetadata 1.5
Fig. 7 - Trideni 1.6
Fig. 8 - Vstup 1.7
Fig. 9 - ZmenaZdroj 1.8
Fig. 10 - HTMLForm 2.1
Fig.11 - Zdroj 3.1
Fig. 12 - $$SearchTemplateDefault 3.2
Fig.13 - Result 4.1
Fig.14 - Informace 5.1
Fig.15- Zaznam 5.2
Fig.16 - Typ 6.1
Fig.17 - XML 6.2

### The Invention Embodiment Example

The example embodiment of the Integrated system of electronic documentation of public administration sources is based on the IBM Lotus Notes/Domino platform.

Inventor has several year experience with operation of applications on this platform, his own licences, and the platform is suitable for development and operation of the prototype.

IBM Lotus Notes/Domino architecture ensures the data, presentation and application levels.

The Integrated system of electronic documentation of public administration resources was elaborated under support of the Academy of Sciences of the Czech Republic - the Information Society Programme council within the Project "Research of Processes for Obtaining, Transferring, Storing and Using Electronic Sources: Integrated System of Documentation of Public Administration Resources" (Project ID: 1 ET209920409).

Safety of IBM Lotus Notes/Domino is based on existence of so called ID files. There are certificates, digital signatures, coding and decoding keys and further delicate information stored in these files. IBM Lotus Notes / / Domino uses RSA (Rivest-Shamir-Adleman) encrypting by a public key for ensuring four basic security levels - authenticity verification, access right (X.509 certificates), message coding, digital signatures.

Each user has his/her unique ID file. Thanks to the ID and the architecture the data may be secured at numerous levels reminding of a funnel, in which a smaller mash is at each level than at the previous level.

### Security levels

1. The access to the server itself is the first level. The server has to contain a certificate of the organization to which the user belongs. A user cannot get to the server without valid certificate. In the case of a server not including the certificate of the particular user's organization a cross certificate for the particular person or for the whole organization may be created.
2. With valid access to the server the user gets to the second security level, namely to the level of individual data containers. Even if the user has access to the server he/she does not necessarily have access to any data, unless he/she is mentioned in the list of access rights in any way (so called ACL - Access Control List).
3. The administrator has the possibility to define more levels of granting access rights. Every user may be assigned as an Application administrator, Developer, Editor, Author without access to data modification, Reader without the right to write, Writer without the right to read or no access at all.
4. The next level deals with individual records (documents). Editors or also readers may be set by means of access fields. If a document has for example a specified set of users with reader rights, it cannot be seen by anybody else than the users of this group, i.e. neither by the application administrator or the administrator.
5. The last-but-one level is security of parts of data of individual records by so called protected sections. A set of data is located in the section and access rights to these data are specified.
6. The last level is security of delicate data at the level of individual data items (fields) by encrypting or one-way hash value A private key added to user ID is used for data encrypting. Encrypting may be multiple, with more keys to be used. An ID file may be copied and with each copy the user has access to common data. If however he/she adds a private key, with which a part of the data is encrypted, to one copy, he/she may only access these data with this particular copy of the ID file. Hashing by means of MD5 technology particularly serves for storing passwords or other authentication data.
   The Integrated system of electronic documentation of public administration sources is now a part of server "statnisprava.cz", the architecture of which is as follows:

Application servers are located in a reserved demilitarized zone with firewall protected access. Other than HTTP communication is not enabled from the public Internet environment. Any Internet user can thus get linked to the servers through an Internet browser, to which he/she displays the content, which is programmed by means of an application level of the project and displays the appropriate part of the data base.

The system administrator - author's staff - administrators and data operators access to the servers from the internal computer network, i.e. from private space, which is separated from the public environment by another firewall. By means of Lotus Notes clients, personal ID files and their own passwords they access from there to the applications and databases and perform maintenance and updating on them.

This provides absolute separation between user and administrator access.

Any user may only display allowed content by means of an Internet browser.

The only possible access to application and to the whole data base is from the system administrator - author's private computer network with valid and certified ID with access to the appropriate server and to the appropriate database and certainly with the passport to this ID.

Forms, by means of which new documents / records, which are also displayed by means of forms, are stored, form an important part of applications / Lotus Notes databases.

Lists of documents are displayed in the internal interface by means of views. Lists of documents are displayed in the web interface by means of views, which are included to the forms (the view of web interface cannot be normally displayed separately - without forms).

So called Agents are parts of Lotus Notes and Domino applications. Agent = application tool of Lotus Notes and Domino software, ensuring automatic running of programmed processes.

### Safety of data and programme applications

Only encrypted databases with applications and data are located on the servers, so if anyone managed to get access to these servers at the operation system level - either by breaking through the firewall or by entering the space of the system operator - author, these databases would be unusable for him/her. Thanks to the multilevel safety of IBM Lotus Notes/Domino the databases are inaccessible outside the environment of the system operator - author and without the appropriate ID and passwords. The space of the system operator - author is protected by security device connected to the centralized security control desk. All the databases are regularly backed up and the backups are stored at a safe place in case of their restoration.

Information sources presented mainly on the Internet according to the Methodological Instruction for description of public administration information sources are the necessary inputs for the system.

Metadata (from Greek meta- = between, behind + Latin data = what is given) are structured data on data. In information resources provided by the Internet metadata are entered directly in the source code and are inaccessible to an ordinary user at the first sight.

Dublin Core is the standard for description of information sources in electronic form.

Dublin Core is the standard for metadata description of digital objects (including WWW sites), often expressed by means of XML. The name is after the town of Dublin, Ohio (USA), where a conference at which it was proposed took place.

The parameters describing information sources according to this standard are as follows:
- Title
- Creator
- Subject
- Description
- Publisher
- Contributor
- Date
- Type
- Format
- Identifier
- Source
- Language
- Relation
- Coverage
- Rights
- Audience

The Methodological Instruction for description of public administration information sources describes public administration information sources and has the function of a common denominator for all the public administration subjects, extends the DC standard by specification elements.

The example embodiment of the Integrated system of electronic documentation of public administration sources connected to the Internet computer network consists of individual databases - Database of information sources 1, Database for information source data and metadata collection 2, Fulltext catalogue 3, Database of sought expressions 4, Controlled dictionary 5 and Metadata 6, which are mutually systemically interconnected, while independent access from web interface 8 as well as internal 9 interface into all the databases 1 to 6 is enabled.

The systemic interconnection of the individual databases of the Integrated system of electronic documentation of public administration resources connected to the Internet computer network runs on the principle that a list of information sources is stored into the Integrated system of electronic documentation of public administration resources to Database of information sources 1 including their locations, the Integrated system of electronic documentation of public administration resources visits all the information sources according to the list and stores their content in Database for information source data and metadata collection 2 according to the preset permitted methods of updating information sources in Database of information sources 1, performs metadata updating in the same database and data updating in Fulltext catalogue 3, indexes the metadata in Database of information sources 1, indexes the data in Fulltext catalogue 3 and provides the results of searching in the metadata or in the data according to the expression sought by the user in Database of information sources 1 and Fulltext catalogue 3, provides priority information sources during searching from Controlled dictionary 5, stores the expression sought for by the user to Database of sought expressions 4 and during searching or edition it offers the user in Database of information sources 1 limitation of the set of sought through documents according to at least one metadata parameter and display of the data in the structure defined in Metadata 6.

Description of the individual databases Integrated system of electronic documentation of public administration resources

The Database of information resources 1 consists of data - documents (records) of information sources in metadata structure according to the Methodological Instruction. Operator's users have access to the database for reading and making changes in the internal interface 9 by means of Lotus Notes client. Some users of cooperating entities have secured access to the database web interface 8 through a username and a password for reading all accessible information sources and for modifying their own information sources. Users with anonymous access without logging in through a username and a password have also access to the database web interface 8 for reading all accessible information sources. Documents of information sources are identified/defined by Zdroj 1.1. form, which contains metadata according to the Methodological Instruction for description of public administration information sources based on the Dublin Core international standard. Views intended for working with data are located in the internal interface 9.

Apart from registration of metadata of information sources their web interface presentation is also provided within this database.

The following elements serve for information classification:
<dc:source>
   This element indicates from which subsystem (specialized database) an information source comes (the source the described information source is a part of).
<dc:language>
   This element indicates what language the information source is written in. One information source may have more language mutations.
<dc:format>
   This element indicates what format the information source is stored in. One information source may be stored in more formats.
<dc:date>
   This element indicates important date in the information source life cycle.
<dc:creator>
   This element indicates the entity primarily responsible for the information source content.
<dc:publisher>
   This element indicates the entity primarily responsible for the information source accessibility.
<dc:contributor>
   This element indicates the entity primarily responsible for the content of contributions to the information source.
<dc:coverage>
   This element indicates field classification, coverage related to the content of the described information source.

The information sources are published within dynamically generated web interface 8 - classified lists on the operator's web address http://www.ebe.cz/edzvs/redakce.nsf/i/home.

The editing system created within the Database of information sources 1 ensures processes updating information source metadata. There are processes created for loading data from the Database of information sources for collection of data and metadata 2 of information sources to the editing system, where direct updating of metadata of an information source already stored in the Database of information sources 1 according to preset criteria, or requirements for modification of information source metadata are created. Operator's staff members may access to the editing system by means of Lotus Notes client, and co-operating entities may access by means of web interface 8 after logging in by a username and password, who may perform direct updating of their own information sources, for the content of which they are responsible - through the EditZdroj 1.4 form, or they may create requests for change of information source metadata - through the ZmenaZdroj 1.8 form. Anonymous user may also create requests for change by means of the web interface 8. The editing work is done by the operator's staff trained for this activity.

Change requirements for information source metadata are identified/defined by ZmenaZdroj 1.2. form.

The web interface 8 - searching for information sources is prepared by means of Lotus Notes/Domino form $$SearchTemplateDefault 1.3, to which a user may write the required expression and possible further searching parameters. The form consequently returns a list of information sources corresponding to the required expression in the "Recommended information sources" classification - upon the Controlled dictionary, "Found information sources" - Module-Database of information sources 1 and "Fulltext searching" - reference to the searching result in non-fulltext catalogue 3.

Indexation of information sources for searching is provided by a Lotus Notes/Domino task Indexer running in the Database of information sources 1 on the operator's server. The indexer creates a separate file on the server - a fulltext index of all the information sources stored in the database. The index is then used in processing requests from users for searching.

### Information on the forms

Form Zdroj 1.1 serves for entering and editing information source metadata by means of the Lotus Notes client and enables:
- entering the appropriate metadata in the structure according to the Methodology Instruction;
- storing the setting whether the information source is to be publicly accessible;
- allocation of an information source to any of the expressions in the Controlled dictionary 5;
- definition of authors / users with the right to edit a document;
- definition in what way the stored document may be updated.

A saving check function ensures that if any of the presented identifiers already exists in the database the form cannot be stored.

Form ZmenaZdroj 1.2 serves to the internal interface 9 users for entering and processing a change request to the information source metadata by means of Lotus Notes client and enables:
- identification of the change request type, usually generated automatically by the system;
- identification of the request origin, usually generated automatically by the system;
- storing the setting whether the information source will be publicly accessible after processing the change request;
- entering the appropriate metadata in the structure according to the Methodology Instruction;
- loading the original metadata values from the appropriate information source before occurrence of the change request and possible advice of value change.

If any of the presented identifiers already exists in the database the form cannot be stored.

Form $$SearchTemplateDefault 1.3 - serves for displaying the searching results in web interface. If an expression being sought by a user exists in the Controlled dictionary 5, information sources and information allocated to the expression being sought from the Controlled dictionary 5, and a list of information sources from Database of information sources 1, which are associated with the given expression from the Controlled dictionary 5 by means of the field Dictionary are displayed at the appropriate place on the form in the "recommended information sources" section by means of the running VyhledavaniSlovnik agent. The VyhledavaniSlovnik agent also ensures an entry into the Database of sought expressions 4.

Form EditZdroj 1.4 - serves for entering and editing information source metadata by a user logged in in web interface 8.

The form enables entering the appropriate metadata in the structure according to the Methodology Instruction and store of adjustment, whether the information source is to be publicly accessible.

If any of the presented identifiers already exists in the database the form cannot be stored.

Before storing there is a check whether the Title, Date, Creator, Publisher and Identifier fields are filled in. The form cannot be stored if these data are not filled in.

Form OpenMetadata 1.5 - the form serves for displaying XML metadata of the information source in web interface 8.

Form Trideni 1.6 - the form serves for displaying a list of information sources in web interface 8 according to chosen classification method.

The form enables a choice what information sources should be displayed to the user.

Form Vstup 1.7 - the form serves for displaying a list of information sources of the logged in user in web interface 8 - his/her access page.

Form ZmenaZdroj 1.8 - the form serves for entering a request for change of metadata of an information source in web interface 8 and for displaying metadata of an information source in web interface 8 in text form.

The form enables:
- displaying metadata in text form;
- entering the appropriate metadata in the structure according to the Methodology Instruction;
- storing the setting whether the information source will be publicly accessible;
- storing identification of the change request type, which is subsequently displayed on the internal interface;
- storing the setting whether the information source will be publicly accessible, which is subsequently displayed on the internal interface.
   If any of the presented identifiers already exists in the database the form cannot be stored.

Before storing there is a check whether the Title, Date, Creator, Publisher and Identifier fields are filled in. The form cannot be stored if these data are not filled in.

### Information on agents

Agent C ZmenaUdaju - automatic operation - runs when a change request is stored in the form ZmenaZdroj 1.2 in the database internal interface 9 by the key Status\Confirm Changes.

### Process description

Agent ZmenaUdaju C loads all the new values from a change request according to the Methodology Instruction.

If the change request status is "U" - change request it finds the appropriate information source to which the change request was created.

If the change request status is "N" - creation request, it creates a new information source and informs the internal interface 9 user about that via the information window.

After that it stores the new values loaded from the change request to the information source and informs the internal interface 9 user about the updating via the information window.

Agent A VyhledavaniSlovnik - automatic operation - runs when a search result within the form $$SearchTemplateDefault 1.3 is displayed in web interface 8. According to the expression entered by the user it finds and displays information from Controlled dictionary **5** and writes all searching parameters to Database of sought expressions 4.

### Process description:

Agent A VyhledavaniSlovnik loads the expression entered by the user to the searching system. After that it searches whether the same expression as the main expression or any of the keywords exists in the Controlled dictionary 5. If it finds the expression in the Controlled dictionary 5 it finds what complementary information, e.g. reference, texts are available in the Controlled dictionary 5 to the expression. If it finds complementary information to the expression it displays it at the defined place in the "Recommended information sources" section of the searching form. Agent A VyhledavaniSlovnik then loads all the parameters entered by the user to the searching system and stores them as a new document defined by the form Result 4.1 to the Database of sought expressions 4.

Database for information source data and metadata collection 2 provides collection of data and metadata of information sources and newly downloaded data and metadata of information sources are stored here for further processing by the system. A Crawler is built here for ensuring the processes of collection of information sources. This tool collects data and particularly metadata of information sources from the Internet environment to Module 2-Database for information source data and metadata collection 2.

Only the users of the operator's internal interface 9 have access to the database.

### Information on the forms

Documents are indicated/defined by HTMLForm 2.1, which enables storing of features of information sources, data and metadata, storing source code and text content of sites.

Views intended for the work with data are located in the internal interface 9 of the database.

Form also serves for storing information on an internet site stored by Agent B NactiURLserver - automatic process collecting data and metadata of information sources.

Form HTMLForm 2.1 enables the following to be stored:
- Title value included in the HTML source code of given site;
- real URL addresses of given site;
- URL addresses on which information source/site metadata are located;
- information whether the information source metadata stored in XML have been processed by the system;
- all text information of the site.

### Information on the agents

Agent B NactiURLserver - automatic operation serving for downloading data and metadata of an information source - for further processing by Agent D
ZpracujXMLserver.
Process description
Agent B NactiURLserver first marks all the documents in the Fulltext catalogue 3 for deletion.
After that agent B NactiURLserver browses all the information sources in the Database of information sources 1 that contain URL identifier and the preset method of updating information source is either "Automatically after metadata downloading" or "Upon request after metadata downloading".
According to the URL identifier (URL address) it downloads the data and metadata of given Internet site and stores them into the Database for information source data and metadata collection 2 as documents defined by HTMLForm 2.1.

It stores the text content of the sites to the Fulltext catalogue 3, and if the site has also a metadata file the ID of the information source to which the site belongs is also stored. Documents designated earlier for deletion from the Fulltext catalogue 3 are finally deleted.

Agent D ZpracujXMLserver - automatic operation serving for processing downloaded data and metadata of an information source - it updates metadata of information sources in Database of information sources 1 or creates requests for their modification.

Process description

Agent ZpracujXMLserver browses all the information sources in Database of information sources 1.

It finds all identifiers of each information source (Identifier item according to the Methodology Instruction).

The corresponding system searches downloaded metadata that have not been processed according to each of the indicators found in the Database for information source data and metadata collection 2.

If it finds any metadata it either updates the corresponding information source in the Database of information sources 1 or creates a change request upon the metadata currently stored in the Database for information source data and metadata collection 2, according to the adjustment of the method of information source updating in the Database of information sources 1.

If more metadata are found to a single information source the updating process of the particular information source only creates change requests in the Database of information sources 1 and no automatic updating of the information source is performed.

Fulltext catalogue 3 is a database serving for automated storing of text information on Internet sites the content of which is collected and updated by means of automated processes Lotus Domino agents to documents in Fulltext catalogue 3, defined by the form Zdroj 3.1. Apart from text information registration the database also provides its presentation through Internet presentation, web interface 8 searching in the Fulltext catalogue 3.

Operator's internal interface 9 users have access to the database by means of the Lotus Notes client for reading and making possible modifications. User's with anonymous access (without logging by means of a username and a password) as well as users logged in by means of a username and a password have access to the web interface 8 of database part for reading all accessible documents with text information on Internet sites.

Views intended for working with data are located in the database internal interface 9.

The web interface 9 - fulltext searching is prepared by means of the Lotus Notes/Domino form $$SearchTemplateDefault 3.2, to which a user may enter the required expression and further possible searching parameters. The form subsequently returns a list of sites corresponding with the required expression.

Indexation of documents for searching is provided in the Fulltext catalogue 3 by a Lotus Notes/Domino task Indexer running on the operator's server. The indexer creates a separate file - a fulltext index of all the documents stored in the database. The index is then used in processing requests from users for searching.

Information on the forms

Form Zdroj 3.1 - serves for storing data of an information source, e.g. an Internet site loaded by the agent NactiURLserver from the Database for information source data and metadata collection 2.

The form enables:
- entering information to which information source from Database of information sources 1 the particular data are linked to;
- storing the text content of the site loaded by the agent NactiURLserver from Database for information source data and metadata collection 2.
   Form $$SearchTemplateDefault 3.2 - the form serves for displaying the search results in web interface. During its display the agent E ZapisVyhledavani ensuring entry into Database of sought expressions is activated 4.

Database of sought expressions 4 is a database created for entering searched expressions from the web interface 8. The entry is always performed when a searching result is displayed to the database of searched expressions.
The entry is ensured by a Lotus Notes/domino agent from Database of information sources 1 or from the Fulltext catalogue 3. Users of internal interface 9 have access to the database.
The documents are identified/defined by the form Result 4.1, enabling displaying the expression being searched for by a user of the internal interface, and displaying further searching parameters set by a web interface user, e.g. the number of found results according to user' requirement.
Views intended for working with data are located in the internal interface 9.

Controlled dictionary 5 - a database intended for definition of the most frequently searched expressions, containing the most sought expressions, including their synonyms and inflected forms. The most important information sources, which thus gain considerable priority in searching in web interface 8 are allocated to these most sought expressions, including their synonyms and inflected forms.

Operator's internal interface 9 users have access to the database by means of Lotus Notes client

### Information on the forms

Form Zaznam 5.2 identifies/defines the documents of the most often searched expressions.

The form enables:
- storing the main expression and related keywords, synonyms and inflected forms;
- storing the setting whether the expression from the Controlled dictionary 5 shall be publicly accessible;
- storing a unique Lotus Notes identifier, with which the Database of information sources 1 then works, e.g. in a situation when a user links an information source to an expression from the Controlled dictionary 5.

Form Informace 5.1 identifies/defines the documents to which references and information related to the particular document defined by the form Zaznam 5.2 are stored.

The form serves for storing information (texts, references, pictures) that is to be displayed from the Controlled dictionary 5 within the form $$SearchTemplateDefault 1.3 during searching in web interface 8 of Database of information sources 1,

The appropriate main expression of Controlled dictionary 5 to which the information belongs to is automatically entered when the document is stored.

The date of publication (Yes/No) from the appropriate main expression of Controlled dictionary 5 to which the information belongs to is automatically entered when the document is stored.

Views intended for working with data are located in the internal interface 9.

Metadata 6 - this database serves for setting the basic scheme of displaying metadata of information sources in XML and for displaying the metadata themselves.

Operator's internal interface 9 users have access to the database by means of Lotus Notes client.

The basic scheme document is identified/defined by the form XML 6.2.

Form Typ 6.1 subsequently identifies/defines the exact displaying schemes of metadata in XML, applied in the individual databases in web interface.

Views intended for working with data are located in the internal interface 9.

Edit system 7- the database serving for creation of the basic navigation to the web interface 8. The operator's internal interface 9 users that have access for reading and making changes by means of Lotus Notes client adjust navigation references and add further possible text information assisting users in orientation in web interface 8.

They perform these settings by means of the Stranka 7.1 form, which defines features / display method of the target information - edit system page, internal reference to the Internet, file etc. By the form Odkaz 7.2 they place references to the navigation menus or to individual sites of the web interface 8.

User's with anonymous access without logging by means of a username and a password as well as users logged in by means of a username and a password have access to the web interface 9 and the database for reading all the accessible pages of Edit system 7.

Views intended for working with data are prepared in the internal interface 9.

### Industrial Applicability

The Integrated system of electronic documentation of public administration resources serves for unified registration and exchange if information between the public administration and the public.

## Claims

1. Integrated system of electronic documentation of public administration resources connected to an information source, particularly to the Internet computer network, **characterized by** the fact that it consists of Module-Database of information sources (1), Module-Database for information source data and metadata collection (2), Module-Fulltext catalogue (3), Module-Database of sought expressions (4), Module-Controlled dictionary (5) a Module-Metadata (6), which are mutually systemically interconnected, while independent access by means of web interface (8) as well as internal (9) interface into all the Modules (1) to (6) is enabled.

2. The Integrated system of electronic documentation of public administration resources according to claim 1, **characterized by** the fact that Module-Database of information sources (1) consists of data - documents of information sources provided with metadata - automatically stored metadata.

3. The Integrated system of electronic documentation of public administration resources according to claim 1, **characterized by** the fact that Module-Database for information source data and metadata collection (2) consists of currently downloaded data and metadata of information sources.

4. to claim The Integrated system of electronic documentation of public administration resources according 1, **characterized by** the fact that Module-Fulltext catalogue (3) consists of data - automatically stored text information from Internet sites.

5. The Integrated system of electronic documentation of public administration resources according to claim 1, **characterized by** the fact that Module-Database of sought expressions (4) is a database created for entering searched expressions in the web interface (8), while the entry is performed during each displaying of searched results into the database of sought expressions automatically.

6. The Integrated system of electronic documentation of public administration resources according to claim 1, **characterized by** the fact that Module-Controlled dictionary (5) consists of data - the most frequently sought expressions, including their synonyms and inflected forms, to which the most important information sources are linked.

7. The Integrated system of electronic documentation of public administration resources according to claim 1, **characterized by** the fact that Module-Metadata (6) consists of data and serves for setting the basic scheme of displaying metadata of information sources in XML and for displaying metadata themselves.

8. The method of systemic interconnection of the modules of the Unified system of electronic documentation of public administration resources according to claims 1 through 7 is based on the principle that a list of information sources is stored into the Integrated system of electronic documentation of public administration resources to Module 1-Database of information sources including their locations, the Integrated system of electronic documentation of public administration sources visits all the information sources according to the list and stores their content in Module 2-Database for information source data and metadata collection according to the preset permitted methods of updating information sources in Module 1-Database of information sources, performs metadata updating in the same module and data updating in Module 3-Fulltext catalogue, indexes the metadata in Module 1-Database of information sources, indexes the data in Module 3-Fulltext catalogue and provides the results of searching in the metadata or in the data according to the expression sought by the user in Module 1-Database of information sources and Module 3-Fulltext catalogue, provides priority information sources during searching from Module 5-Controlled dictionary, stores the expression sought for by the user to Module 4-Database of sought expressions and during searching or edition it offers the user in Module 1-Database of information sources limitation of the set of sought through document according to at least one metadata parameter and display of the data in the structure defined in Module 6-Metadata.

9. The method of systemic interconnection of the modules of the Integrated system of electronic documentation of public administration resources according to claims 1 through 8 performs automatic operations by means of agents, while Agent A VyhledavaniSlovnik - runs when a search result within the form $$SearchTemplateDefault 1.3 is displayed in web interface (8), while according to the expression entered by the user it finds and displays information from Module-Controlled dictionary (5) and writes all searching parameters to Module-Database of sought expressions (4), loads the expression entered by the user to the searching system and after that it searches whether the same expression as the main expression or any of the keywords exists in the Module-Controlled dictionary (5) and if it finds the expression in the Module-Controlled dictionary (5) it finds what complementary information, e.g. reference, texts are available in the Module-Controlled dictionary (5) to the expression and if it finds complementary information to the expression it displays it at the defined place in the "Recommended information sources" section of the searching form, and then agent A VyhledavaniSlovnik loads all the parameters entered by the user to the searching system and stores them as a new document defined by the form Result (4.1) to the Module-Database of sought expressions (4).

10. The method of systemic interconnection of the modules of the Integrated system of electronic documentation of public administration resources per claims 1 through 8 performs automatic operations by means of agents, while Agent B NactiURLserver serves for downloading data and metadata of an information source - for further processing by Agent D ZpracujXMLserver, while Agent B NactiURLserver first marks all the documents in the Module-Fulltext catalogue (3) for deletion, after that agent B NactiURLserver browses all the information sources in Module-Database of information sources (1) that contain URL identifier and the preset method of updating information source is either "Automatically after metadata downloading" or "Upon request after metadata downloading", while according to the URL identifier (URL address) it downloads the data and metadata of given Internet site and stores them into the Module-Database for information source data and metadata collection (2) as documents defined by HTMLForm (2.1). and it stores the text content of the sites to the Module-Fulltext catalogue (3), and if the site has also a metadata file the ID of the information source to which the site belongs is also stored and documents designated earlier for deletion from the Module-Fulltext catalogue (3) are finally deleted.

11. The method of systemic interconnection of the modules of the Integrated system of electronic documentation of public administration resources per claims 1 through 8 performs automatic operations by means of agents, while Agent D ZpracujXMLserver serves for processing downloaded data and metadata of an information source, it updates metadata of information sources in Module-Database of information sources (1) or creates requests for their modification, while Agent ZpracujXMLserver browses all the information sources in Module-Database of information sources (1) and it finds all identifiers of each information source and the corresponding system searches downloaded metadata that have not been processed according to each of the indicators found in the Module-Database for information source data and metadata collection (2) and if it finds any metadata it either updates the corresponding information source in the Module-Database of information sources (1) or creates a change request upon the metadata currently stored in the Module-Database for information source data and metadata collection (2), according to the adjustment of the method of information source updating in the Module-Database of information sources (1), and if more metadata are found to a single information source the updating process of the particular information source only creates change requests in the Module-Database of information sources (1) and no automatic updating of the information source is performed.
